# EUROPEAN PATENT APPLICATION

(11) **EP 1 986 116 A2**
(43) Date of publication of application: **29.10.2008**
(21) Application number: 07119354.4
(22) Date of filing: 26.10.2007
(51) Int. Cl.: G06F 21/00

(54) **Content reproducing apparatus for reproducing content using network service**

(30) Priority: 27.04.2007 JP 2007120106
(71) Applicant: Kabushiki Kaisha Toshiba, Minato-ku, Tokyo 105-8001 (JP)
(72) Inventor: Haruki, Kosuke c/o Intellectual Property Division, Minato-ku Tokyo 105-8001 (JP); Kambayashi, Toru c/o Intellectual Property Division, Minato-ku Tokyo 105-8001 (JP); Aizu, Hiroyuki Toshiba Corporation, Minato-ku Tokyo (JP); Ishimaru, Dai Toshiba Corporation, Minato-ku Tokyo (JP); Kanda, Shigeru, Minato-ku Tokyo (JP); Shigeta, Chihoko c/o Intellectual Property Division, Minato-ku Tokyo 105-8001 (JP); Kokubo, Takashi Toshbia Corporation, Minato-ku Tokyo (JP); Kawabata, Shunichi Toshbia Corporation, Minato-ku Tokyo (JP); Sato, Mitsue Toshiba Corporation, Minato-ku Tokyo (JP); Meng, Zhang c/o Intellectual Property Division, Minato-ku Tokyo 105-8001 (JP); Shiomi, Yoshikazu c/oIntellectual Property Division, Minato-ku Tokyo 105-8001 (JP); Tobita, Yoshikata c/o Intellectual Property Division, Minato-ku Tokyo 105-8001 (JP)
(74) Representative: Henkel, Feiler & Hänzel

(57) **Abstract**

A content reproducing apparatus includes: a disc drive device that reproduces content recorded on a recording medium; a network controller that controls data transmission between an external server specified by the content reproduced by the disc drive device; a content protection encoder/decoder unit that: (1) encodes a request to be sent to the external server via a proxy server that decodes the request; and (2) decodes a response from the external server being transmitted in response to the request decoded by the proxy server, the response being encoded by the proxy server; and a controller that controls the network controller and the content protection decode/encoder unit.

## Description

### CROSS-REFERENCE TO RELATED APPLICATIONS

This application is based upon and claims the benefit of priority from Japanese Patent Application No. 2007-120106, filed on April 27, 2007, the entire content of which are incorporated herein by reference.

### BACKGROUND

### 1. Field

One embodiment of the invention relates to a content reproducing apparatus and a content reproducing method for reproducing a digital content including a video image and an audio signal to reproduce a content supplied via a recording medium such as an optical disc of a DVD standard.

### 2. Description of the Related Art

As a recording medium that can retain video content or audio content with high definition, an optical disc has been put to practical use for a long time.

Since the optical disc can reproduce the content from an arbitrary reproducing position and has a large recording capacity relative to a physical size in comparison with a tape shaped medium, the optical disc has been rapidly propagated.

In recent years, a laser beam having a short wavelength such as blue or violet is used to reproduce recorded content (information), so that a high definition digital versatile disc (abbreviate it as an HD DVD, hereinafter) in which video data of an HD standard and surrounding audio data of a high quality can be stored in one disc has been also put to practical use.

In the optical disc of an HD DVD standard (partly including the optical disc of a DVD standard), one of content stored in the optical disc includes an address for recommending to access a supply source of the content through a network or information of a link destination. On the other hand, in the optical disc of the HD DVD standard, the content based on an AACS (Advanced Access Content System) are protected for devices connected by the network from a duplication that does not obtain a consent of a right holder.

A document JP-T-2005-514716 (counterpart international application number is: PCT/US2004/006820) discloses a converting method for converting content supplied from a provider to a native DRM (Digital Rights Management) in which the difference of a DRM system does not bring a disadvantage (such as, a preparation of a content reproducing apparatus meeting a plurality of DRMs) to a content consumer (user).

The document JP-T-2005-514716 discloses an interface relative to a plurality of content providers using different DRM systems so that a disadvantage is not brought to request a content consumer (user) to prepare a content reproducing apparatus meeting a plurality of DRMs and the disadvantage is not given to the consumer, while a consistent DRM system is maintained on a network to which a content distributing operator belongs, however, does not disclose (develop) an AACS of an HD DVD standard.

### SUMMARY

One of objects of the present invention is to provide a content reproducing apparatus and a content reproducing method using a network service that can protect content from an access for a duplication that does not obtain a consent of a person having a right in transmitting and receiving data between the reproducing device held by a user and a Web server, when an application employing an AACS (Advanced access content system) content protection standard uses an ordinary Web service.

According to a first aspect of the present invention, there is provided a content reproducing apparatus including: a disc drive device that reproduces content recorded on a recording medium; a network controller that controls data transmission between an external server specified by the content reproduced by the disc drive device; a content protection encoder/decoder unit that: (1) encodes a request to be sent to the external server via a proxy server that decodes the request; and (2) decodes a response from the external server being transmitted in response to the request decoded by the proxy server, the response being encoded by the proxy server; and a controller that controls the network controller and the content protection decode/encoder unit.

According to a second aspect of the present invention, there is provided a content reproducing method including: reproducing content recorded on a recording medium; transmitting an encoded request via proxy server to an external server that is specified by the reproduced content; decoding a response received via the proxy server from the external server, the response being transmitted in response to the request and being encoded by the proxy server; and performing a predetermined process in addition to the reproduction of the content in accordance with the decoded response.

According to a third aspect of the present invention, there is provided a content reproducing system including: a content reproducing apparatus including: a disc drive device that reproduces content recorded on an optical disc that conforms with an HD DVD standard; a network controller that controls data transmission between a content provider via a network; and a controller that performs transmission of a request and receipt of a response that are protected by an AACS standard when accessing the content provider that is specified in the content by performing a data transmission between the content provider using a key contained in the content; and a proxy server that is provided separate from the content provider, the proxy server providing to the content provider a decoded request that is obtained by decoding a request encoded in accordance with the AACS standard by the controller, and providing to the content reproducing apparatus an encoded response that is obtained by encoding a response received from the content provider.

### BRIEF DESCRIPTION OF THE SEVERAL VIEWS OF THE DRAWINGS

A general architecture that implements the various feature of the invention will now be described with reference to the drawings. The drawings and the associated descriptions are provided to illustrate embodiments of the invention and not to limit the scope of the invention.

Fig. 1 is a schematic view showing one example of a content reproducing apparatus according to an embodiment of the present invention.

Fig. 2 is a schematic view for explaining types of data that can be stored in an HD DVD disc reproduced by the content reproducing apparatus.

Fig. 3 is a schematic view for explaining a file system stored in the HD DVD disc, the file system being the structure of directories and files.

Fig. 4 is a schematic view for explaining a concept for connecting the content reproducing apparatus shown in Fig. 1 to an external server through a network.

Fig. 5 is a schematic view for explaining a series of procedure for reproducing content of an HD DVD-Video that can be obtained from the external server on the network shown in Fig. 4 and protected by an AACS standard by the content reproducing apparatus shown in Fig. 1.

### DETAILED DESCRIPTION

An embodiment of the present invention will be described by referring to the drawings.

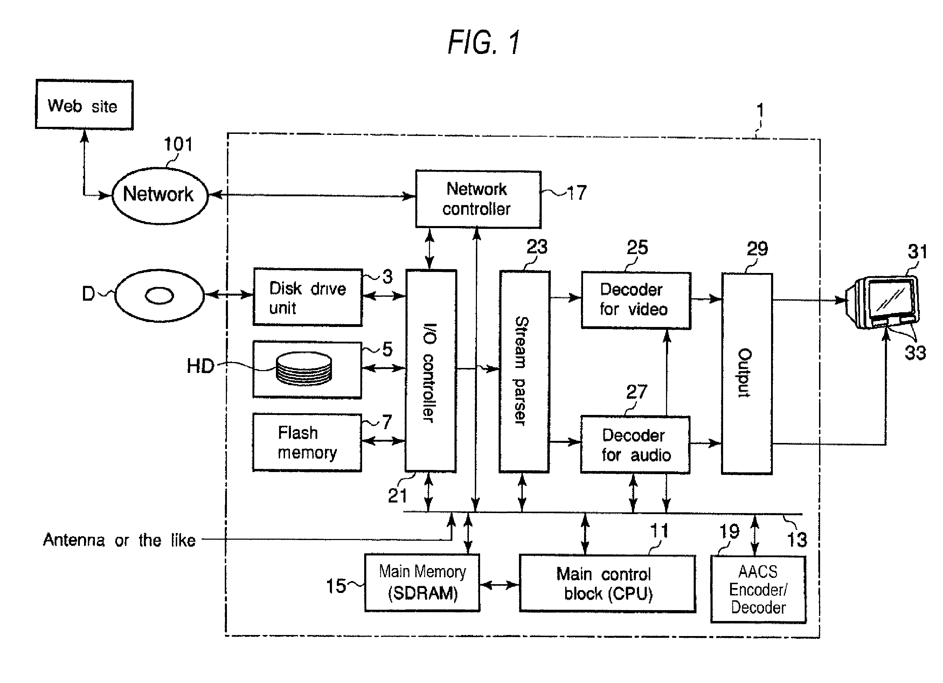

Fig. 1 schematically shows one example of a content reproducing apparatus according to the embodiment of the present invention. The content reproducing apparatus may be applied to, for instance, a personal computer, a video camera or a portable terminal device capable of reproducing a video program or video content. Further, the content reproducing apparatus may be sold as a computer-readable program treated to be supplied to portable computer devices, the personal computer or a portable video game device.

The content reproducing apparatus 1 shown in Fig. 1 includes a disc drive unit 3 that can reproduce information stored in an optical disc D by setting a recording medium, for instance, a DVD disc D of an HD standard (High definition Digital Versatile Disc, abbreviate it as an HD DVD, hereinafter), a hard disc drive (HDD) unit 5 including a hard disc HD used as a persistent storage (refer it to as a P-storage, hereinafter) and a semiconductor memory as a non-volatile memory, for instance, a flash memory 7.

The disc drive unit 3, the hard disc drive unit 5 and the flash memory 7 are connected to a main control block 11 including a CPU through a data bus 13 and an I/O controller 21. To the data bus 13, a main memory (SDRAM) 15, a network controller 17 and an AACS encoder/decoder 19 are connected.

Data held in the HD DVD disc D, the HDD 5 and the flash memory 7 has a well-known data form called a packetized stream (refer it to as a "PS", hereinafter). Further, in the case of an HD DVD recorder, which is not specifically described, the capacity of the HDD 5 is large, so that a digital broadcast wave from a ground and a satellite received by a television tuner part not shown in the drawing can be recorded. A digital broadcasting has a TS (Transport stream, refer it to as a "TS") form.

In the PS, video and audio and other control data are time-division multiplexed. Further, the video and the audio are transmitted in compressed forms in order to reduce quantities of data to be respectively transmitted. Most of data are video data and compressed by a standard called, for instance, H. 264, VC1 or MPEG2.

The data fetched through the I/O controller 21 is stored in the SDRAM (main memory) 15 through the data bus 13 and inputted to a stream parser 23 during reproducing the data. The data inputted to the stream parser 23 is separated to a video, that is, a video signal and a music (including an audio), that is, an audio signal and decoded by a video decoder 25 and an audio decoder 27 respectively corresponding thereto.

The decoded video signal, that is, the video is outputted through an output part 29 so as to be displayed in a display device 31 such as a liquid crystal display or a CRT. Further, the decoded audio signal, that is, the music or the audio is outputted to a speaker 33 (sometimes incorporated in the display device) from the output part 29.

The network controller 17 transmits or transfers data to or receive data from an external server (web site) or an arbitrary number of content reproducing apparatuses on a LAN through a public communication line or a local area network (LAN) .

The external server includes, for instance, a web site developed by a supply source of the HD DVD disc D or a distribution site (content provider) as a specific connecting destination designated by or cooperating with the supply source of the disc to provide content with a charge or with no charge. Further, to the network, a portable content reproducing apparatus having substantially the same function as that of the content reproducing apparatus 1 or, for instance, a content reproducing apparatus of the same type provided in another position in a home or a content reproducing apparatus of another type that can reproduce the HD DVD disc D can be connected.

In the content reproducing apparatus 1 shown in Fig. 1, when the HD DVD disc sold at a market, that is, video software is set in the disc drive unit 3 and reproduced, the web site of the disc supply source prepared as an address or link destination information that recommends to access the supply source of the content stored in the optical disc and the specific connecting destination cooperating with the disc supply source can be accessed via the network controller 17.

The web site of the disc supply source prepared in the HD DVD disc is accessed so that a video added after the video software is produced, for instance, an original program prepared as a privilege of a buyer of the video software or additional content such as the audio of a different language that is not stored in the video software can be arbitrarily downloaded. The additional content include, for instance, content referred to as a newly arriving guide such as the guide of other video software supplied by the same supply source.

The additional content obtained by downloading is stored in, for instance, the hard disc HD of the HDD unit 5 or the flash memory 7.

Accordingly, when the optical disc is reproduced in the content reproducing apparatus, the additional content provided by the content supply source is downloaded from the network so that the additional content can be reproduced simultaneously with or in parallel with the content stored in the DH DVD disc. The additional content that can be obtained from the content supply source include such content as to require a charge, namely, require a charge for each download.

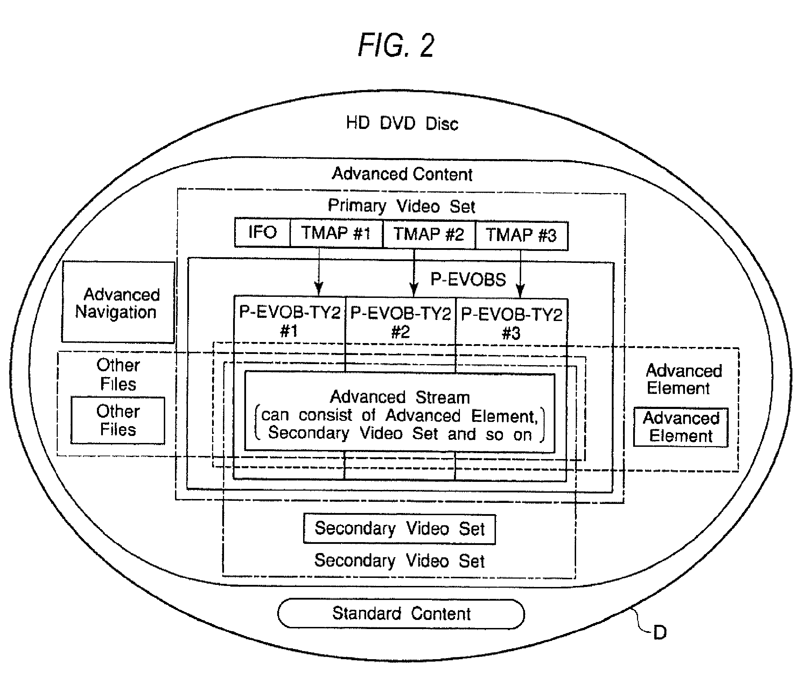

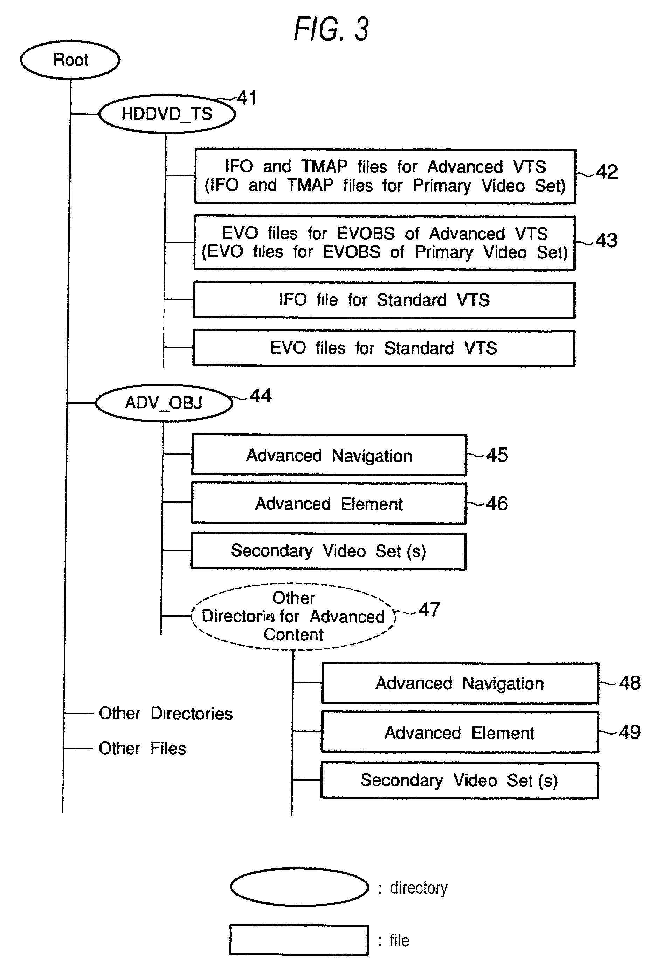

When the recording medium set in the disc drive unit 3 of the content reproducing apparatus 1 is the HD DVD disc, the content stored in the HD DVD disc include, as described below by referring to Fig. 2, content referred to as advanced content and content referred to as advanced directory as described below by referring to Fig. 3.

As shown in Fig. 2, the optical disc having the HD DVD standard can store both the advanced content and standard content. As data types of the advanced content that can be considered, an Advanced Navigation, an Advanced Element, a primary video set, a secondary video set or the like are exemplified.

An advanced stream is a data format that archives any type of advanced content files except the primary video set. The advanced stream is multiplexed on a primary enhanced video object type 2 (P-EVOBS-TY2) and drawn out together with P-EVOBS-TY2 supplied to a primary video player.

The same files that are archived in the advanced stream and necessary for reproducing the advanced content need to be stored as files. The duplicated copies thereof assure the reproduction of the advanced content, because when the reproduction of the primary video set is jumped, the supply of the advanced stream may not be possibly completed. In this case, before the reproduction is resumed from a designated jump position, the necessary file is directly read to a data cache from the disc.

An Advanced Navigation file is considered as a file. The Advanced Navigation file is read during an activating sequence and interpreted for reproducing the advanced content .

An Advanced Element may be considered as a file. Further, the Advanced Element can be archived in the advanced stream that is multiplexed on the P-EVOB-TY2 data.

Only one Primary Video Set(s) is provided on the disc.

The Secondary Video Set may be considered as a file and can be archived in the advanced stream that is multiplexed on the P-EVOB-TY2 data.

Other files may be prepared (exist) depending on the advanced content.

Fig. 3 is a schematic view for explaining a file system stored in the HD DVD disc shown in Fig. 2, that is, the structure of directories and files. As shown in Fig. 3, the files for the advanced content are preferably located in the directories.

An "HD DVD-TS" directory (HD DVD-TS directory) 41 is prescribed in an immediately lower layer of a root directory. One advanced VTS 42 and 43 for the primary video set and one or a plurality of standard video sets are defined below this directory 41.

An "ADV-OBJ" directory (Advanced Video-Object) 44 is located just below the HD DVD-TS directory 41. All activating files belonging to the Advanced Navigation 45 are located in this directory. All files of the Advanced Element 46 and the secondary video set (sets) are located in the ADV-OBJ directory in addition to all the files of the Advanced Navigation 45.

Other directories for advanced content 47 can be located only below the "ADV-OBJ" directory. Files of the Advanced Navigation 48, the Advanced Element 49 and the secondary video set can be located in this directory. The name of this directory is formed with d characters and d1 characters. The total of sub-directories (excluding the "ADV-OBJ" directory) of the "ADV-OBJ" is smaller that 512. The depth of directory layers is set to 8 or smaller.

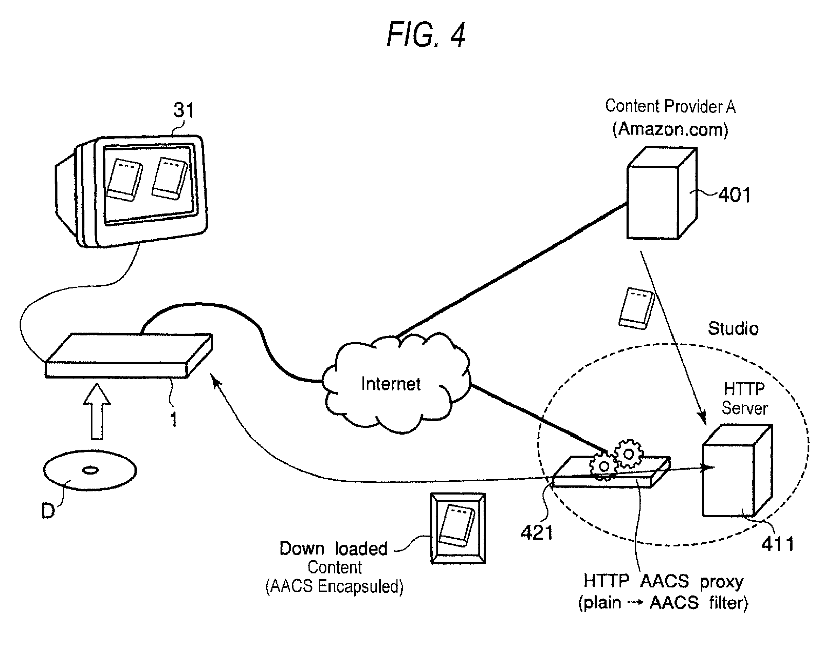

The content stored in the HD DVD disc described with reference to Figs. 2 and 3 include the address that recommends to access the supply source of the content prepared by the content supply source or the web site of the disc supply source prepared as the link destination information and address information for accessing a server of the specific connecting destination (for instance, Amazon. com or the like is known as a representative example) cooperating with the disc supply source. In the HD DVD standard, a connection to the web site or a transmission and reception of data relative to the content reproducing apparatus on the network needs to be based on an AACS (Advanced access content system) content protection standard. As shown in Fig. 4, when a server 401 managed by the specific connecting destination (for instance, Amazon.com or the like, refer it to as a content provider A, hereinafter) cooperating with (recommended by) the disc supply source is accessed, a specific limitation or an access procedure is set. In the access to the server of the content provider A cooperating with (recommended by) the disc supply source, some parts exist that are not established respectively even in companies in which the AACS is determined.

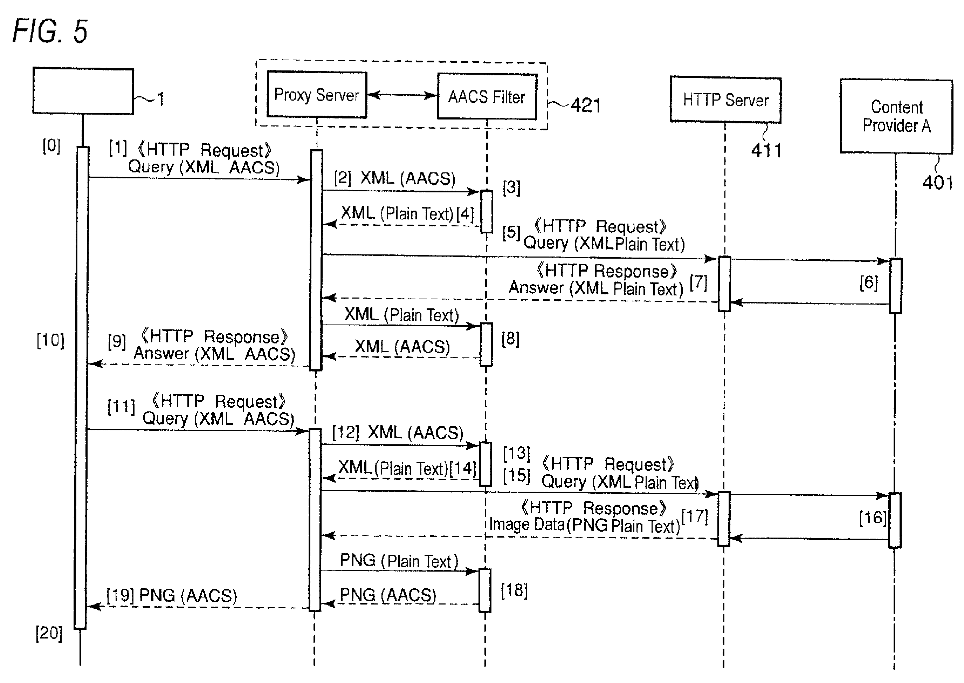

Now, referring to Fig. 5, one example of a content reproducing method will be described that can protect the content from an access for a duplication having no consent of a person with a right in transmitting and receiving data between the content reproducing apparatus 1 owned by a user and a Web server when the user uses a Web service on the network in accordance with the AACS.

Initially, by referring to Fig. 4, the summary of the transmission and reception of the data between the content reproducing apparatus 1 and an arbitrary Web server will be described below.

As shown in Fig. 1, the content reproducing apparatus 1 is connected to a network 101 through the network controller 17, so that an arbitrary web site of an internet network can be accessed. On the other hand, for the content protected by the AACS, as shown in Fig. 4, an HTTP server 411 and an HTTP AACS proxy server 421 need to be interposed between the content provider A401 and the content reproducing apparatus 1.

Namely, in the web site that can be connected through the internet network, there is a provider that provides, like the above-described content provider A, a service for freely drawing information in the site by using a schemer defined by an XML document.

When this service is used from an ordinary PC application, an application may be described that content required by the user are deformed in the form of the schemer provided by the Web site and transmitted to the Web site. This is a well-known installation.

However, when an HD DVD-video can be reproduced as in the content reproducing apparatus 1 shown in Fig. 1, the installation like the ordinary PC application is not realized due to the restriction of a specification of an HD DVD-Video standard or the AACS standard as the protecting standard of the content thereof.

Accordingly, when the content of the web site are displayed as the content of the HD DVD, a processing flow peculiar to the content of the HD DVD is necessary that is different from a display flow from an ordinary browser. Further, a flow peculiar to the AACS as the protecting standard of the content needs to be installed so as to be reflected in the flow peculiar to the above-described HD DVD in an added form thereto.

Referring again to Fig. 4, the HTTP server 411 cannot represent the schemer requested by the server of the content provider A401 in accordance with the specification of an application determined by the HD DVD-Video standard. Thus, in the HTTP server 411, a filtering process is necessary to perform a conversion. As one form, content to be downloaded are encapsulated in the AACS standard.

Namely, in the AACS standard, when the content reproducing apparatus 1 that can reproduce the HD DVD-Video to transmit and receive the XML document via the network (Internet network), the XML document itself needs to be protected by the AACS. Therefore, in the HTTP server 411, the AACS proxy server 421 as a filter is necessary for an AACS process. In most of cases, the HTTP server 411 and the AACS proxy server 421 are referred to as studios and provided independently of the content provider A401.

An actual access between the content reproducing apparatus 1 and the content provider A401 is performed as described below through the proxy server 421 including an AACS filter (encoder/decoder) integrally or independently and the HTTP server 411 as shown in Fig. 5.

In the content reproducing apparatus 1, the XML document having the specification of the HD DVD-Video standard is prepared and encoded in accordance with the AACS (step [0] shown in Fig. 5).

The document formed in the step (0) (AACS encoded text) is transmitted to the proxy server 421 <an HTTP request, that is, a query is transmitted in "XML AACS"> (step [1] shown in Fig. 5).

The proxy server 421 decodes "XML AACS" in accordance with the AACS (step [2]), then, analyzes the XML document, converts the XML document to an XML document form (a plain text, namely, an ordinary description that is not encoded) requested by the content provider A401 (step [3]), and returns the XML document to the proxy server 421 (step [4]).

The XML document (plain text) formed in step [3] is transmitted to the HTTP server 411 that can access the content provider A401 <HTTP request> (step [5]).

A result (for instance, a search result or an introduction of related recommendable content) to a request of the XML document received from the content provider A401 (step [6] ) is returned in the XML document correspondingly to an access (request) from the HTTP server 411 <an HTTP request (Response), that is, a reply or answer is transmitted (returned) to the" XML document (plain text)"> (step [6]).

The "XML document (plain text)" as the content for introducing the search result or the recommendable content from the content provider A401 that is returned to the proxy server 421 in step [7] is encoded in the AACS encoder/decoder (converted to an XMLAACS form corresponding to the HD DVD Video standard on which the content reproducing apparatus 1 is based (step [8] ) , and returned to the content reproducing apparatus 1 as <an HTTP response> (step [9]).

The content reproducing apparatus 1 decodes the received XML document in the AACS encoder/decoder to perform an executing process in accordance with the content of the XML document (step [10]).

For instance, in the XML document returned to the content reproducing apparatus 1 as the <HTTP response>, when the presence of a distribution service of a privileged video related to the content stored in the HD DVD disc D set in the content reproducing apparatus 1 is reported and the user having the content reproducing apparatus 1 desires to obtain the privileged video, the following operations are processed.

The XML document having the specification of the HD DVD-Video standard formed in the content reproducing apparatus 1 by the input operation of the user is encoded in accordance with the AACS and an AACS encoded text is transmitted to the proxy server 421 <an HTTP request> (step [11]).

The proxy server 421 decodes the AACS encoded text in accordance with the AACS and analyzes the XML document (step [12]), converts the XLM document to an XML document form requested by the content provider A401 (step [13]), and returns the XML document to the proxy server 421 (step [14]).

The XML document formed in step [13] is transmitted to the HTTP server 411 that can access the content provider A401 <an HTTP request> (step [15]).

A result (for instance, a requested file (PNG file) of the privileged video or the like) to a request of the XML document received from the content provider A401 (step [16]) is returned in the XML document correspondingly to an access (request) from the HTTP server 411 (step [17]).

The PNG file from the content provider A401 that is returned to the proxy server 421 in step [17] is encoded in the AACS encoder/decoder (AACS package that can be decoded by the content reproducing apparatus 1) (step [18]), and returned to the content reproducing apparatus 1 as <an HTTP response> (step [19]).

The content reproducing apparatus 1 decodes the received XML document (PNG file) in the AACS encoder/decoder to perform an executing process (in this example, a development of the PNG file/output of a displaying signal) in accordance with the content of the XML document (step [20]).

In the example shown in Figs. 4 and 5, a network server (an access destination) to be accessed is changed at any time depending on the content reproduced by the content reproducing apparatus 1. Namely, the name of the network server (access destination information) that makes it possible to access the content provider A401 in accordance with the address (the name of the network server) described/held as the advanced content of the HD DVD disc D is provided integrally in the content. That is, the proxy server is provided independently of the content reproducing apparatus, so that the content provider can employ respectively independent servers by designating with the description of the advance areas of the content.

Further, key information for an AACS encoding is shared by the content and the network server, and is not prepared in the content reproducing apparatus 1. Thus, a security is more improved. Namely, a key is share by the content and the network server so that the key information is not global secret information and can be more employed with the responsibility of the content provider than a method for storing the key in the reproducing device.

The transmission and reception of the content encoded in accordance with the AACS (AACS packaged) between the network and the content provider 401 via the proxy server 421 may be stored in a firmware of the main control block (CPU) 11 or provided from an external part and held in, for instance, the HDD 5 or a program memory that is not shown in the drawing.

As described above, according to the embodiment of the present invention, the content reproducing apparatus can be obtained in which even when the application using the AACS (Advanced access content system) content protection standard employs the ordinary Web service, the content can be protected from the access for a duplication that does not obtain the consent of a person having a right in transmitting and receiving data between the reproducing device held by the user and the Web server. Further, usually (as described in the document JP-T-2005-514716), a conversion is performed for each DRM system, however, the same encoding and decoding operations are performed even for different content using the same DRM system. A new idea of the present invention resides in that different keys for encoding and decoding can be set between the content even in the same protecting system of AACS. Even if a hacking arises, the hacking can be limited only to one content.

Further, the content reproducing method can be realized in which when the optical disc D having the HD DVD-Video standard is reproduced, the server of the specific connecting destination (content provider A) cooperating with (recommended by) the disc supply source in addition to the web site of the disc supply source can be accessed and new information got by the access can be obtained. Further, since the application of the HD DVD-Video standard has a part that is not completely compatible with an ordinary Web application, a process of an incompatible part is assigned to the server itself for actually providing the service or the proxy server independent of the content reproducing apparatus held by the user. Thus, a developing load of an enterpriser that provides the Web service or an installing load (and the increase of a cost caused thereby) to the reproducing device can be reduced.

It is to be understood that the present invention are not limited to the embodiments described herein, and other various embodiments may be realized within a scope without departing the scope of the claimed invention. Further, in the present invention, an image display device (a television receiver) is described as an example. However, it is to be understood that an information recording and reproducing device, that is, a video disc recorder or a personal computer (PC) is also included in the present invention. The embodiments may be respectively suitably combined together as many as possible, or a part thereof may be deleted. In that case, various effects resulting from the combination or the deletion are obtained.

## Claims

1. A content reproducing apparatus comprising:
a disc drive device that reproduces content recorded on a recording medium;
a network controller that controls data transmission between an external server specified by the content reproduced by the disc drive device;
a content protection encoder/decoder unit that:
(1) encodes a request to be sent to the external server via a proxy server that decodes the request; and
(2) decodes a response from the external server being transmitted in response to the request decoded by the proxy server, the response being encoded by the proxy server; and
a controller that controls the network controller and the content protection decode/encoder unit.

2. The content reproducing apparatus according to claim 1, wherein the proxy server and the external server to be accessed by the network controller are described in the content reproduced by the disc drive device.

3. The content reproducing apparatus according to claim 1, wherein a key used for the encoding/decoding performed by the content protection encoder/decoder unit is contained in the content.

4. The content reproducing apparatus according to claim 1, wherein the disc drive device reproduces the content being compliant with an HD DVD-Video standard.

5. A content reproducing method comprising:
reproducing content recorded on a recording medium;
transmitting an encoded request via proxy server to an external server that is specified by the reproduced content;
decoding a response received via the proxy server from the external server, the response being transmitted in response to the request and being encoded by the proxy server; and
performing a predetermined process in addition to the reproduction of the content in accordance with the decoded response.

6. The content reproducing method according to claim 5, wherein a key used for decoding the request and encoding the response by the proxy server is contained in the content, and
wherein the key is retained by the proxy server.

7. The content reproducing method according to claim 5, wherein the proxy server and the external server are specified in the reproduced content.

8. The content reproducing method according to claim 7, wherein the content in which the proxy server and the external server are specified is an advanced content that conforms with an HD DVD standard.

9. A content reproducing system comprising:
a content reproducing apparatus including:
a disc drive device that reproduces content recorded on an optical disc that conforms with an HD DVD standard;
a network controller that controls data transmission between a content provider via a network; and
a controller that performs transmission of a request and receipt of a response that are protected by an AACS standard when accessing the content provider that is specified in the content by performing a data transmission between the content provider using a key contained in the content; and
a proxy server that is provided separate from the content provider, the proxy server providing to the content provider a decoded request that is obtained by decoding a request encoded in accordance with the AACS standard by the controller, and providing to the content reproducing apparatus an encoded response that is obtained by encoding a response received from the content provider.
